(19) Europäisches Patentamt
European Patent Office
Office européen des brevets

(11) Numéro de publication : **0 252 857 B1**

(12) # FASCICULE DE BREVET EUROPEEN

(45) Date de publication du fascicule du brevet : **10.04.91 Bulletin 91/15**

(51) Int. Cl.⁵ : **G01N 27/00**

(21) Numéro de dépôt : **87420161.9**

(22) Date de dépôt : **15.06.87**

(54) **Procédé de réalisation d'une surface-grille sur un capteur électrochimique intégré constitué d'un transistor à effet de champ et capteur en faisant application.**

(30) Priorité : **17.06.86 FR 8608989**

(43) Date de publication de la demande : **13.01.88 Bulletin 88/02**

(45) Mention de la délivrance du brevet : **10.04.91 Bulletin 91/15**

(84) Etats contractants désignés : **AT BE CH DE ES GB GR IT LI LU NL SE**

(56) Documents cités :
**US-A- 3 831 432**
**US-A- 4 490 216**
**HELVETICA CHIMICA ACTA, vol. 65, no. 172, fasc. 6, 1982, pages 1752-1759, Schweizerische Chemische Gesellschaft; F. DEYHIMI et al.: "Rapid silylation of a glass surface: choice of reagent and effect of experimental parameters on hydrophobicity"**
**JOURNAL OF APPLIED ELECTROCHEMISTRY, vol. 14, 1984, pages 803-806, Chapman and Hall Ltd; F. DEYHIMI et al.: "Surface resistivity of different silylated glasses"**
**PATENT ABSTRACTS OF JAPAN, vol. 10, no. 380 (P-528)[2437], 19 décembre 1986; & JP-A-61 170 645**

(73) Titulaire : **ETABLISSEMENT PUBLIC A CARACTERE SCIENTIFIQUE, CULTUREL ET PROFESSIONNEL: ECOLE CENTRALE DE LYON**
**36, Avenue Guy de Collonge B.P. 163**
**F-69131 Ecully Cédex (FR)**

(72) Inventeur : **Jaffrezic, Nicole**
**10 Parc des Bruyères**
**F-69130 Ecully (FR)**
Inventeur : **Martelet, Claude**
**18 Chemin des Combes "Le Morateur"**
**F-69370 Saint Didier au Mont d'Or (FR)**
Inventeur : **Bataillard, Pierre**
**233 D Le Plateau La Duchère**
**F-69009 Lyon (FR)**
Inventeur : **Clechet, Paul**
**4 Boulevard Jules Favre**
**F-69006 Lyon (FR)**
Inventeur : **De Rooij, Nicolas Frans**
**15 rue des Croix**
**CH-2014 Bole (CH)**
Inventeur : **van den Vlekkert, Hendrik Harmen**
**12 quai Philippe Godet**
**CH-2000 Neuchatel (CH)**

(74) Mandataire : **Ropital-Bonvarlet, Claude et al**
**Cabinet BEAU DE LOMENIE, 51, avenue Jean-Jaurès**
**F-69007 Lyon (FR)**

EP 0 252 857 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est relative aux capteurs chimiques intégrés constitués d'un transistor à effet de champ dans lequel la grille métallique est remplacée par une grille sélective de l'espèce ionique à doser et placée en contact avec la solution à analyser.

De tels capteurs résultent de l'évolution ou du développement des propriétés des transistors à effet de champ comprenant, dans un substrat semi-conducteur, deux zones dopées dénommées source et drain et, dans une couche d'un matériau diélectrique recouvrant le semi-conducteur et les zones dopées, une zone centrale recouverte d'une grille dont l'alimentation électrique variable permet de moduler le passage du courant entre la source et le drain.

Dans la publication IEEE TRANS. BIOMED. Eng. BME, 17 (1970) 70, P. BERGVELD a proposé de supprimer la grille et de placer directement la surface du matériau diélectrique en contact avec une solution électrolytique contenant des espèces $H^+$ et $OH^-$ et dans laquelle plonge une électrode de polarisation. Pour une polarisation donnée, on obtient un courant de drain représentatif de la concentration de la solution électrolytique. Toute modification de concentration module le courant de drain. Le transistor fonctionne alors en capteur chimique intégré.

Pour élargir le domaine d'application limité au milieu contenant des ions H, il a été préconisé d'interposer, entre la solution électrolytique et la surface du matériau diélectrique, une surface-grille ionosensible. Une telle surface-grille peut être constituée par une membrane organique ou minérale rapportée par collage ou par apport par dépôt chimique sous vide. Une telle méthode permet de disposer d'une surface-grille spécifique d'un produit et d'assurer ainsi facilement l'analyse de ce dernier dans un milieu déterminé.

Une telle évolution a apporté un avantage certain par rapport à la solution première, mais ne donne pas entière satisfaction, en raison du vieillissement de la membrane rapportée quine permet pas de procurer une fiabilité dans le temps.

Il convient de citer, en tant qu'art antérieur, le brevet US-A-3 831 432 concernant un détecteur à gaz, constitué par un transistor à effet de champ possédant une surface spécifique soumise à un traitement d'hydratation et d'imprégnation avec une solution à base de silane.

L'art antérieur connaît aussi l'enseignement divulgué par la publication "HELVETICA CHIMICA ACTA - Vol 65. FASC 6 (1982), n°172 qui concerne silylation d'une surface de borosilicate de sodium en vue de le rendre hydrophobe. Cette publication vise la fabrication de microélectrodes fonctionnant par mesure de conductivité.

Or, de tels capteurs font l'objet d'un besoin certain dans de nombreuses applications exigeant une analyse électrochimique et parmi lesquelles il convient de citer l'application biomédicale, telle que la recherche in vivo d'un composant du sang.

La présente invention vise à résoudre le problème ci-dessus en proposant un nouveau procédé de réalisation, sur un capteur électrochimique intégré, d'une surface-grille sélective ou inerte possédant des caractéristiques de fonctionnement fiable dans le temps et permettant une miniaturisation poussée des capteurs en faisant application.

L'invention a également pour objet un capteur électrochimique intégré possédant une surface-grille obtenue par la mise en oeuvre du procédé.

Pour atteindre les buts ci-dessus, le procédé selon l'invention consiste à

- soumettre la partie surface-grille à un traitement d'hydroxylation pour obtenir $10^{14}$ à $10^{15}$ sites OH par $cm^2$, en procédant :
  - à un décapage avec une solution de soude à concentration comprise entre 0,1 et 1 M pendant une durée comprise entre 5 et 30 minutes et à une température comprise entre 15 et 40°C,
  - et à un lavage à l'eau distillée à température ambiante,
- laver et sécher la surface-grille,
- soumettre la partie surface-grille à un dégazage sous vide par chauffage sous vide,
- soumettre la partie surface-grille à une imprégnation avec une solution de silane,
- réaliser la condensation du silane par chauffage dans une atmosphère de gaz neutre,
- laver la partie surface-grille avec un solvant du silane en excès.

L'invention a également pour objet, à titre de produit industriel nouveau, un capteur électrochimique intégré constitué d'un transistor à effet de champ doté d'une surface-grille réalisée selon le procédé suivant l'une des revendications 1 à 10 et caractérisé par la présence, dans le spectre infrarouge à transformée de FOURIER et par réflexion multiple de la surface grille, d'un double pic ou épaulement caractéristique de liaisons $-O-Si-CH_2-$ dans une bande comprise entre 900 et 1 100 $cm^{-1}$

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue schématique d'une étape de fabrication d'un capteur chimique intégré conforme à

l'invention.

La **fig. 2** est une courbe représentative d'un spectre infrarouge à transformée de FOURIER et, par réflexions multiples, de la surface-grille d'un capteur faisant application du procédé de l'invention.

La **fig.1** montre un capteur chimique intégré comprenant un substrat **1** en un matériau semi-conducteur ayant subi, à partir de la surface **2**, une opération de dopage, en vue de délimiter deux zones **3** et **4** destinées à constituer, respectivement, une source et un drain. La surface **2** est revêtue d'une couche **5** d'un matériau diélectrique de qualité électronique pouvant être, par exemple, de la silice, de l'alumine, ou de l'oxyde de tantale. La couche **5**, avant ou après l'établissement des contacts **6** et **7** avec la source et le drain, est revêtue d'un masque **8** sur toute sa surface, hormis la partie devant correspondre à l'établissement d'une surface-grille située, en superposition de plans, dans la partie centrale entre la source et le drain **4**.

Selon une technique connue, la partie découverte de la couche **5** est traitée de manière à obtenir une couche **9** de matériau diélectrique de grille d'épaisseur comprise entre 300 et 2 500 Å selon le matériau diélectrique.

Selon l'invention, le procédé comprend une phase préparatoire consistant à assurer l'hydroxylation de la partie **10**, en vue d'obtenir de $10^{14}$ à $10^{15}$ sites OH par $cm^2$ de surface. Cette phase d'hydroxylation peut être conduite par décapage à partir d'une solution aqueuse basique contenant de la soude à une concentration de 0,1 et 1 M. Cette phase peut être conduite par trempage pendant une durée comprise entre 5 et 30 minutes, la solution de décapage étant maintenue à une température comprise entre 15 et 40°C.

Cette phase d'hydroxylation peut être conduite, dans le cas où la couche **5** est constituée par de la silice seule, par une phase d'hydratation consistant à placer la partie **10** devant supporter la surface-grille à réaliser en contact avec de l'eau bidistillée maintenue à une température de 95°C. Cette phase d'hydratation est poursuivie pendant une durée comprise entre 1 et 48 heures et, préférentiellement, égale à 12 heures.

Une seconde étape de cette phase d'hydroxylation consiste alors à effectuer un lavage de la partie **10** par trempage ou écoulement d'un flux d'eau distillée délivrée à la température ambiante.

La phase d'hydroxylation est suivie d'un séchage s'établissant sous flux d'un gaz inerte à température ambiante.

La phase préparatoire est alors terminée et permet le déroulement de la phase de traitement consistant à réaliser la surface-grille sur la partie **10**.

La première étape de réalisation de la surface-grille consiste à soumettre la partie **10** à un dégazage sous vide entre 1 et 5 P, de préférence 1 P, en chauffant la partie **10** entre 120 et 160°C et, de préférence, à 140°C. Cette phase de dégazage sous vide s'établit pendant une durée de 1 à 5 heures, de préférence limitée à 2 heures pour obtenir une surface **10** complètement déshydratée et dégazée.

Une seconde étape de traitement pour l'obtention et la formation de la surface-grille consiste alors à réaliser l'imprégnation de la partie **10** avec une solution de silane dans un solvant inerte. Cette solution contient de 0,5 à 5% de silane de formule générale :

$$\begin{array}{ccc} & R'_1 & \\ & | & \\ R_1 - & Si & - (CH_2)_n - R_2 \\ & | & \\ & R'_1 & \end{array}$$

dans laquelle :

- $R_1$ est soit :
  - . $(CH_3)_2$ N -
  - . $CH_3$ - O -
  - . $CH_3$ - $CH_2$ - O -
  - . Cl -

- alors que $R'_1$ peut être :
  - . $CH_3$ -
  - . $CH_3$ - O -
  - . $CH_3$ - $CH_2$ - O -

Dans cette formule, $R_2$ peut être un groupement ionosensible selon le type de sélectivité à réaliser ou, encore, être un groupement alkyle saturé, dans le cas où il est souhaité obtenir une surface-grille inerte, en vue de la constitution d'un capteur chimique intégré de référence.

Le solvant inerte utilisé peut être choisi parmi l'isopentane, l'hexane, l'heptane.

La solution de silane est maintenue à une température comprise entre −10°C et −50°C et se trouve, de préférence, établie à −30°C. La partie **10** est soumise à cette solution de silane dans une atmosphère sous vide comprise entre 1 et 5 P et, de préférence, fixée à 1 P, pendant une durée comprise entre une à cinq heures et, de préférence, au moins égale à deux heures, pour permettre l'élimination complète du solvant.

Une troisième étape de cette seconde phase de réalisation d'une surface-grille consiste à produire la condensation du silane imprégné, en soumettant la partie **10** à un chauffage entre 120°C et 160°C, pendant une durée de 15 à 48 heures, dans une enceinte à la pression ambiante en présence d'un gaz inerte, tel que l'azote ou l'argon. De préférence, cette étape comprend un chauffage à 140° pendant 24 heures.

Une dernière étape consiste alors à réaliser un lavage de la surface 10 avec un solvant du silane en excès, tel que l'éther, le tétrahydrofurane, par trempage ou écoulement à température ambiante et, de préférence, en renouvelant une à quatre fois le solvant.

Une dernière étape consiste ensuite à effectuer un séchage dans les mêmes conditions que celles retenues pour ce qui concerne la phase préparatoire décrite ci-dessus.

La partie **10** s'est alors transformée en une surface-grille obtenue par greffage du silane et présente la caractéristique physique, après séjour pendant 24 heures dans une solution aqueuse de NaCl 0,1 M à pH 2 et/ou séjour de 24 heures dans un solvant pur, tel que hexane, éther, tétrahydrofurane, de se distinguer par la présence, comme cela est illustré par la **fig. 2**, en relation avec une surface-grille obtenue par imprégnation d'une solution d'un silane pour lequel :

- $n = 21$
- $R_1 = (CH_3)_2$ N−
- $R'_1 = CH_3$
- et $R_2 = CH_3$

dans son spectre infrarouge à transformée de FOURIER et par réflexions multiples d'un double épaulement ou pic caractéristique −O-Si-$CH_2$− référencé **I** et situé dans une bande de 900 à 1 100 $cm^{-1}$. Cette présence découle de la transformation du radical $R_1$ sur les sites OH de la surface **10** en sites O.

Pour améliorer les caractéristiques de greffage et accroître la concentration en sites O et en liaison −O-Si-$CH_2$−, il est avantageux, selon l'invention, de recommencer une seconde fois la deuxième phase de traitement consistant à réaliser un dégazage, une imprégnation, une condensation, un lavage et un séchage de la surface **10**.

La mise en oeuvre du procédé ci-dessus permet une grande intégration et la constitution d'un capteur comportant une surface-grille sélective et une surface-grille inerte de référence. Cette surface-grille inerte peut être constituée, par exemple, dans le cas de sélectivité à l'ion argent par le matériau diélectrique non traité. Dans une telle structure, il est possible d'obtenir une surface-grille sélective à l'ion argent et traitée par un silane pour lequel $R_2$ est $-C \equiv N$, fournissant une réponse de 30 millivolts par décade de concentration en ions argent et une surface-grille inerte à l'ion argent et constituée par la silice de grille, fournissant une réponse de 2 millivolts par décade de concentration en ions argent.

Dans le cas de réalisation d'un capteur chimique intégré possédant une surface-grille inerte, quel que soit le milieu à analyser, en vue de la constitution d'un capteur de référence, le traitement selon l'invention avec un silane pour lequel $R_2 = CH_3$ et $n = 21$, permet d'obtenir une réponse d'environ 8 millivolts par unité pH.

L'objet de l'invention trouve une application avantageuse à la production de capteurs chimiques intégrés

et miniaturisés, destinés à l'analyse électrochimique en milieu industriel et, plus particulièrement encore, biomédicale, telle que le dosage d'éléments minéraux dans le sang.

## Revendications

1. Procédé de réalisation d'une surface-grille sur un capteur électrochimique intégré constitué d'un transistor à effet de champ, du type consistant à déposer, sur la surface d'un substrat semi-conducteur ayant subi un traitement de surface ayant pour but de former deux zones dopées destinées à représenter, respectivement, une source et un drain, une couche d'un matériau diélectrique soumise elle-même à un traitement en vue de délimiter les contacts de source et de drain, ainsi qu'une surface médiane sur laquelle doit être formée la surface-grille, caractérisé en ce qu'il consiste à :

- soumettre la partie surface-grille à un traitement d'hydroxylation pour obtenir $10^{14}$ à $10^{15}$ sites OH par $cm^2$, en procédant :
  - à un décapage avec une solution de soude à concentration comprise entre 0,1 et 1 M pendant une durée comprise entre 5 et 30 minutes et à une température comprise entre 15 et 40°C,
  - et à un lavage à l'eau distillée à température ambiante.
- laver et sécher la surface-grille,
- soumettre la partie surface-grille à un dégazage sous vide par chauffage sous vide,
- soumettre la partie surface-grille à une imprégnation avec une solution de silane,
- réaliser la condensation du silane par chauffage dans une atmosphère de gaz neutre,
- laver la partie surface-grille avec un solvant du silane en excès.

2. Procédé selon la revendication 1, caractérisé en ce qu'il consiste à soumettre la partie surface-grille à une seconde étape de traitement comprenant un dégazage, une imprégnation, une condensation et un lavage.

3. Procédé selon la revendication 1 ou 2, caractérisé en ce qu'il consiste, avant dégazage, à :

- d'une part, laver abondamment la partie surface grille à l'eau distillée,
- et, d'autre part, sécher la partie surface-grille au moyen d'un flux de gaz inerte à température ambiante.

4. Procédé selon la revendication 1 ou 2, caractérisé en ce qu'il consiste à soumettre la partie surface-grille à un dégazage par chauffage compris entre 120 et 160°C, pendant une durée comprise entre 1 et 5 heures et dans une enceinte entretenant un vide relatif compris entre 1 et 5 P.

5. Procédé selon la revendication 4, caractérisé en ce que la phase de dégazage fait intervenir un chauffage à 140°C pendant 2 heures dans un vide relatif entretenu à 1 P.

6. Procédé selon l'une des revendications 1 ou 2, caractérisé en ce qu'il consiste à imprégner la partie surface grille avec une solution de silane de formule :

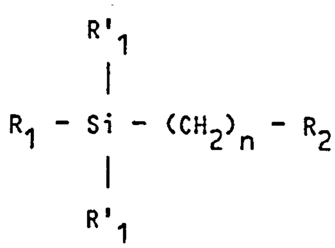

dans laquelle :

- $R_1$ est soit : . $(CH_3)_2N-$
. $CH_3-O-$
. $CH_3-CH_2-O-$
. $Cl-$

- $R'_1$ est soit : . $CH_3$
. $CH_3-O-$
. $CH_3-CH_2-O-$

– et $R_2$ est : • soit un groupement ionosensible,
• soit un groupement alkyle saturé.

7. Procédé selon la revendication 1, 2 ou 4, caractérisé en ce que l'imprégnation s'effectue avec une solution de silane et de solvant, à concentration de silane comprise entre 0,5 et 5%, maintenue à une température comprise entre –10 et –50°C dans une enceinte entretenue à un vide relatif compris entre 1 et 5 P et pendant une durée comprise entre 1 et 5 heures.

8. Procédé selon la revendication 7, caractérisé en ce que la phase d'imprégnation s'effectue avec une solution à 2% de silane, maintenue à –30°C, pendant une durée de 2 heures.

9. Procédé selon la revendication 1 ou 2, caractérisé en ce que la condensation s'effectue par chauffage entre 120 et 160°C pendant 15 à 48 heures en présence d'un gaz inerte sec à pression ambiante.

10. Procédé selon la revendication 9, caractérisé en ce que la phase de condensation s'effectue à une température de 140°C pendant une durée de 24 heures.

11. Capteur électrochimique intégré constitué d'un transistor à effet de champ doté d'une surface-grille réalisée selon le procédé suivant l'une des revendications 1 à 10 et caractérisé par la présence, dans le spectre infrarouge à transformée de FOURIER et par réflexions multiples de la surface grille, d'un double pic ou épaulement caractéristique de liaisons $-O-Si-CH_2-$ dans une bande comprise entre 900 et 1 100 $cm^{-1}$.

## Ansprüche

1. Verfahren zur Herstellung einer Gateoberfläche auf einem, in einen Feldeffekttransistor eingebauten elektrochemischen Sensor, das aus dem Abscheiden einer Schicht aus einem dielektrischen Material, die selbst zur Beschränkung der Kontakte von Quelle und Senke sowie einer mittleren Oberfläche behandelt wird, auf der die Gateoberfläche gebildet werden soll, auf der Oberfläche eines Halbleitersubstrats besteht, welches einer Oberflächenbehandlung mit dem Ziel, zwei dotierte Zonen zu bilden, die jeweils eine Quelle und eine Senke darstellen sollen, unterzogen wird, dadurch **gekennzeichnet**, daß es besteht aus :
– Hydroxylierung des Gateoberflächenteils, um $10^{14}$ bis $10^{15}$ Plätze OH pro $cm^2$ zu erhalten, durch
– Beizen mit einer Sodalösung einer Konzentration von 0,1 bis 1 M 5 bis 30 min lang und bei einer Temperatur von 15 bis 40°C, und
– Waschen mit destilliertem Wasser bei Umgebungstemperatur ;
– Waschen und Trocknen der Gateoberfläche,
– Entgasung des Gateoberflächenteils im Vakuum durch Erhitzen unter Vakuum,
– Imprägnieren des Gateoberflächenteils mit einer Silanlösung,
– Kondensation des Silans durch Erhitzen in einer Inertgasatmosphäre,
– Waschen des Gateoberflächenteils mit einem Lösungsmittel von Silan im Überschuß.

2. Verfahren nach Anspruch 1, dadurch gekennzeichnet, daß das Gateoberflächenteil einem zweiten Behandlungsschritt unterzogen wird, der eine Entgasung, eine Imprägnierung, eine Kondensation und einen Waschvorgang umfaßt.

3. Verfahren nach Anspruch 1 oder 2, dadurch gekennzeichnet, daß es vor der Entgasung enthält :
– zum einen ausgiebiges Waschen des Gateoberflächenteils mit destilliertem Wasser und
– zum anderen Trocknen des Gateoberflächenteils mittels eines Inertgasstroms bei Umgebungstemperatur.

4. Verfahren nach Anspruch 1 oder 2, dadurch gekennzeichnet, daß es eine Entgasung des Gateoberflächenteils durch Erhitzen auf 120 bis 160°C 1 bis 5 Stunden lang in einer Zelle mit einem relativen Vakuum von

1 bis 5 P enthält.

5. Verfahren nach Anspruch 4, dadurch gekennzeichnet, daß der Entgasungsschritt eine Erhitzung auf 140°C für 2 Stunden in einem relativen Vakuum, das auf 1 P gehalten wird, vorsieht.

6. Verfahren nach einem der Ansprüche 1 oder 2, dadurch gekennzeichnet, daß es das Imprägnieren des Gateoberflächenteils mit einer Lösung eines Silans der Formel :

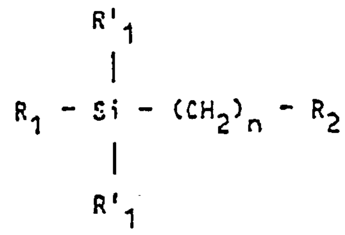

enthält, in der bedeuten :

$- R_1$ entweder: $- (CH_3)_2N-$
oder: $- CH_3-O-$
oder: $- CH_3-CH_2-O-$
oder: $- Cl-$

$- R'_1$ entweder: $- CH_3$
oder: $- CH_3-O-$
oder: $- CH_3-CH_2-O-$

und
$- R_2$ entweder : eine ionosensible Gruppe
oder : eine gesättigte Alkylgruppe.

7. Verfahren nach Anspruch 1, 2 oder 4, dadurch gekennzeichnet, daß die Imprägnierung mit einer Lösung von Silan und Lösungsmittel mit einer Silankonzentration von 0,5 bis 5%, bei einer Temperatur von – 10 bis –50°C in einer Zelle mit einem relativen Vakuum von 1 bis 5 P und für eine Dauer von 1 bis 5 Stunden durchgeführt wird.

8. Verfahren nach Anspruch 7, dadurch gekennzeichnet, daß der Imprägnierungsschritt mit einer 2% igen Silanlösung bei –30°C 2 Stunden lang durchgeführt wird.

9. Verfahren nach Anspruch 1 oder 2, dadurch gekennzeichnet, daß die Kondensation durch Erhitzen auf 120 bis 160°C 15 bis 48 Stunden lang in Gegenwart eines trockenen Inertgases bei Normaldruck durchgeführt wird.

10. Verfahren nach Anspruch 9, dadurch gekennzeichnet, daß der Kondensationsschritt bei einer Temperatur von 140°C 24 Stunden lang durchgeführt wird.

11. Mit einer Gateoberfläche, die nach dem Verfahren von einem der Ansprüche 1 bis 10 hergestellt worden ist, versehener, in einem Feldeffekttransistor integrierter, elektrochemischer Sensor, gekennzeichnet durch die Anwesenheit einer Doppelspitze oder Schulter, die charakteristisch für $-O-Si-CH_2-$ Bindungen in einem Bereich von 900 bis 1100 $cm^{-1}$ ist, im Fourier-transformierten IR-Spektrum (FT-IR) durch mehrfache Reflexionen der Gateoberfläche.

## Claims

1. A method of forming a gate surface on an integrated electrochemical sensor consisting of a field effect transistor, of the type consisting of depositing, upon the surface of a semiconducting substrate which has been subjected to surface treatment in order to form two doped zones intended to form a source and a drain respectively, a layer of a dielectric material which is itself subjected to treatment in order to delimit the source and drain

contacts, and a median surface on which the gate surface is to be formed, characterised in that it consists of:

– subjecting the gate surface portion to hydroxylation treatment to obtain $10^{14}$ to $10^{15}$ OH sites per $cm^2$, by :

- stripping with caustic soda solution in a concentration of between 0.1 and 1 M for a time of between 5 and 30 minutes and at a temperature of between 15 and 40°C,
- and washing with distilled water at ambient temperature,

– washing and drying the gate surface,
– subjecting the gate surface portion to vacuum degassing by heating in vacuo,
– subjecting the gate surface portion to impregnation with a solution of a silane,
– effecting condensation of the silane by heating in a neutral gas atmosphere,
– washing the gate surface portion with an excess of a silane solvent.

2. A method according to claim 1, characterised in that it consists of subjecting the gate surface portion to a second stage of treatment comprising a degassing, an impregnation, a condensation and a washing,

3. A method according to claim 1 or 2, characterised in that it consists of, before degassing :
– washing the gate surface portion abundantly with distilled water,
– and drying the gate surface portion by means of a flow of inert gas at ambient temperature.

4. A method according to claim 1 or 2, characterised in that it consists of subjecting the gate surface portion to degassing by heating to between 120 and 160°C for a time of between 1 and 5 hours in an enclosure within which there is a relative vacuum of between 1 and 5 P.

5. A method according to claim 4, characterised in that the degassing phase involves heating to 140°C for 2 hours in a relative vacuum of 1 P.

6. A method according to either of claims 1 or 2, characterised in that it consists of impregnating the gate surface portion with a solution of a silane having the formula :

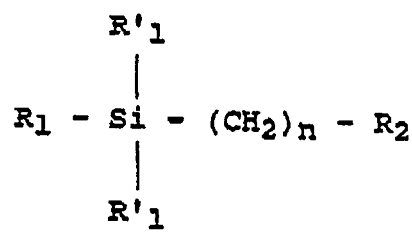

in which :

- $R_1$ is either: $(CH_3)_2N-$
  $CH_3 - O -$
  $CH_3 - CH_2 - O -$
  $Cl -$

- $R'_1$ is either: $CH_3$
  $CH_3 - O -$
  $CH_3 - CH_2 - O -$

– and $R_2$ is : either an ion-sensitive group, or a saturated alkyl group.

7. A method according to claims 1, 2 or 4, characterised in that impregnation is effected using a solution of a silane and solvent having a silane concentration of between 0.5 and 5% held at a temperature between −10°C and −50°C in an enclosure in which there is a relative vacuum of between 1 and 5 P for a time of between 1 and 5 hours.

8. A method according to claim 7, characterised in that the impregnation phase is effected using a 2% silane solution held at −30°C for a time of 2 hours.

9. A method according to claim 1 or 2, characterised in that condensation takes place through heating to

between 120°C and 160°C for 15 to 48 hours in the presence of a dry inert gas at ambient pressure.

10. A method according to claim 9, characterised in that the condensation stage takes place at a temperature of 140°C over a time of 24 hours.

11. A integrated electrochemical sensor consisting of a field effect transistor provided with a gate surface prepared in accordance with the method according to one of claims 1-10 and characterised in that through a Fourier transform and multiple reflections from the gate surface the infra red spectrum includes a double peak or shoulder characteristic of $-O-Si-CH_2-$ bonds in a band lying between 900 and 1100 $cm^{-1}$.

Fig.1

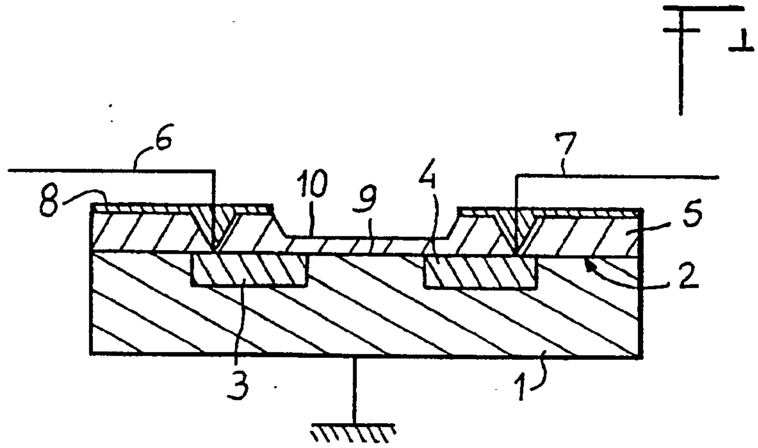
6
7
8
10
9
4
5
2
3
1

Fig.2

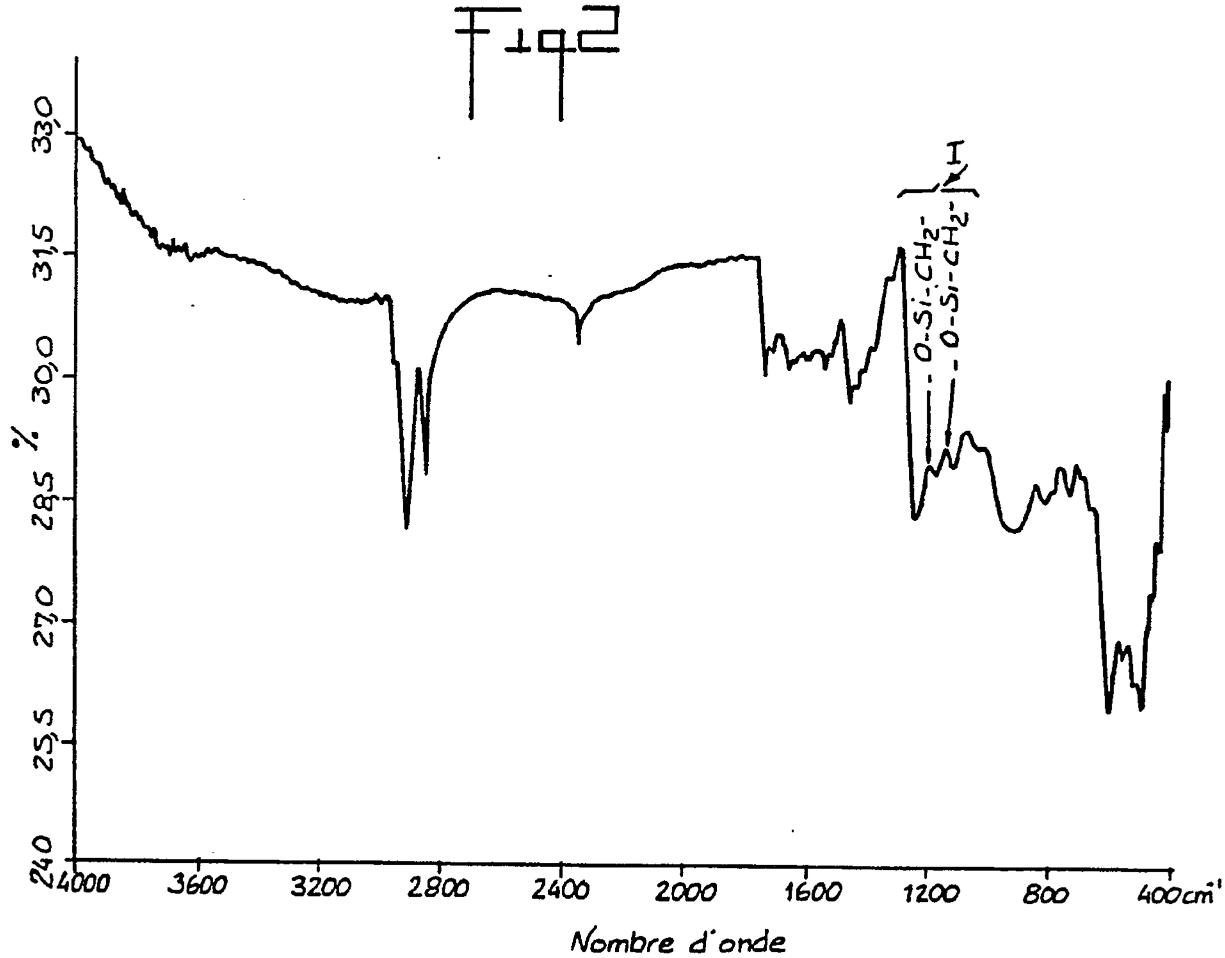
33,0
31,5
30,0
28,5
27,0
25,5
24,0
%
I
O-Si-CH2-
O-Si-CH2-
4000
3600
3200
2800
2400
2000
1600
1200
800
400cm-1
Nombre d'onde